# FASCICULE DE BREVET EUROPEEN

(11) **EP 3 256 712 B1**
(45) Date de publication et mention de la délivrance du brevet: **18.09.2019**
(21) Numéro de dépôt: 16707185.1
(22) Date de dépôt: 09.02.2016
(51) Int. Cl.: F02K 9/50

(54) **DISPOSITIF DE PRESSURISATION D'UN RÉSERVOIR D'OXYGÈNE LIQUIDE D'UN MOTEUR DE FUSÉE**
DRUCKBEAUFSCHLAGUNGSVORRICHTUNG FÜR EINEN FLÜSSIGSAUERSTOFFTANK EINES RAKETENTRIEBWERKS
PRESSURIZATION DEVICE FOR A LIQUID-OXYGEN TANK OF A ROCKET ENGINE

(30) Priorité: 12.02.2015 FR 1551155
(43) Date de publication de la demande: 20.12.2017
(73) Titulaire: ArianeGroup SAS, 75015 Paris (FR)
(72) Inventeur: ROZ, Gérard, 27510 Pressagny l'Orgueilleux (FR); VUILLAMY, Didier, 76230 Quincampoix (FR)
(74) Mandataire: Intès, Didier Gérard André
(86) Numéro de dépôt international: PCT/FR2016/050287
(87) Numéro de publication internationale: WO 2016/128669

(56) Documents cités:
- WO-A1-96/08646
- US-A- 2 395 113
- US-A- 2 558 483

## Description

La présente invention concerne un procédé de pressurisation d'un réservoir d'oxygène liquide pour l'alimentation en comburant d'un moteur de fusée.

Pour faire fonctionner le moteur, l'oxygène est un ergol servant de comburant, un autre ergol qui sert de carburant, tel que l'hydrogène ou le méthane, étant également utilisé pour alimenter le moteur à partir d'un autre réservoir.

Les ergols sont stockés dans les réservoirs à l'état liquide, et ces réservoirs sont maintenus sous pression afin d'assurer que les débits d'ergols dirigés vers le moteur soient réguliers.

La présente invention s'intéresse à la mise en pression du réservoir d'oxygène liquide.

Il est connu, pour pressuriser ce réservoir, d'y injecter un gaz neutre tel que de l'hélium stocké sous forme gazeuse ou liquide dans un réservoir auxiliaire dédié. Pour cela, l'hélium est injecté à l'état gazeux dans la partie supérieure du réservoir pour y former un ciel gazeux. Cette technique est utilisée lors de la pré-pressurisation du réservoir, avant la mise en route du moteur pour le décollage. Elle peut être utilisée en vol, ce qui nécessite alors d'embarquer le réservoir auxiliaire.

Il est également connu de pressuriser le réservoir avec de l'oxygène gazeux. Pour cela, de l'oxygène liquide est prélevé dans le réservoir ou en aval de ce dernier, par exemple au niveau du moteur ou de sa pompe d'alimentation, et cet oxygène prélevé est réchauffé par un moyen approprié pour être gazéifié, et l'oxygène gazeux ainsi obtenu est injecté en partie supérieure du réservoir pour alimenter son ciel gazeux. Cette technique est en particulier utilisée en phase de vol, car elle évite d'avoir à embarquer un réservoir auxiliaire dédié.

Par convention, on désigne dans le présent texte par "pré-pressurisation" la phase initiale de mise en pression du réservoir, réalisée avant la mise en route du moteur et le décollage, et par "pressurisation", la phase de mise en pression et de maintien en pression de ce réservoir en vol et pendant la phase de fonctionnement du moteur.

Les deux techniques précitées sont souvent combinées, la pré-pressurisation à l'hélium gazeux étant mise en oeuvre avant la mise en route du moteur et le décollage de la fusée, et la pressurisation à l'oxygène gazeux étant utilisée en vol.

Ainsi, en vol, le réservoir comprend de l'oxygène liquide en partie inférieure, et un ciel gazeux comprenant de l'hélium et de l'oxygène gazeux. Par exemple, l'oxygène liquide est à une température de 90,5K, tandis que l'hélium gazeux et l'oxygène gazeux injectés en partie supérieure du réservoir sont initialement à des températures de l'ordre de 300K. Même si l'hélium gazeux est refroidi au contact de l'oxygène liquide jusqu'à atteindre une température voisine de celle de l'oxygène liquide, sa densité reste inférieure à celle de l'oxygène gazeux de pressurisation. Ainsi, l'hélium gazeux a tendance à remonter dans le ciel gazeux vers le haut du réservoir, de sorte que l'oxygène gazeux parvient au contact de l'oxygène liquide. En conséquence, l'interface gaz/liquide est une interface entre l'oxygène liquide et l'oxygène gazeux. Les échanges thermiques qui se produisent à cette interface ont pour effet de diminuer la température de l'oxygène gazeux, ce qui augmente sa densité. Il en résulte que la masse de l'oxygène gazeux dans le ciel du réservoir augmente, ce qui augmente globalement la masse du réservoir. De plus, ces échanges provoquent un échauffement de l'oxygène liquide qui, en fin de propulsion, peut atteindre une température inacceptable pour le moteur, en particulier pour sa pompe d'alimentation.

En résumé, le choix de l'hélium comme gaz de pré-pressurisation avant la marche du moteur présente un intérêt dans la mesure où l'hélium gazeux est léger, mais cela ne permet pas de former, à l'interface gaz/liquide, un tampon efficace vis-à-vis du gaz de pressurisation utilisé lorsque le moteur est en fonctionnement.

Le brevet US 2395113 divulgue un mécanisme pour l'alimentation de combustible à un moteur de fusée.

L'invention vise à surmonter les inconvénients précités ou, du moins, à les atténuer.

La présente invention concerne un procédé de pressurisation d'un réservoir d'oxygène liquide pour l'alimentation en comburant d'un moteur de fusée selon les étapes de la revendication 1.

L'invention se rapporte au cas où, après le remplissage du réservoir en oxygène liquide mais avant de faire fonctionner le moteur, on injecte un gaz neutre de pré-pressurisation pour former un ciel gazeux dans le réservoir. Selon l'invention, le gaz neutre est de l'azote.

L'azote est un gaz chimiquement neutre vis-à-vis de l'oxygène, c'est-à-dire que son contact avec l'oxygène ne provoque pas de réaction chimique. De plus, même si l'azote qui se refroidit au contact de l'oxygène liquide se stabilise à une température supérieure à celle de l'oxygène liquide (par exemple de l'ordre de 130K), pour une pression partielle élevée par rapport à celle de l'oxygène, sa densité reste supérieure à celle de l'oxygène gazeux, que l'oxygène gazeux soit à sa température d'injection (par exemple de l'ordre de 300K) ou à une température stabilisée dans le ciel gazeux (par exemple de l'ordre de 130K).

Ainsi, l'azote utilisé pour la pré-pressurisation du réservoir forme, à la surface de l'oxygène liquide, un tampon qui, comme on le verra dans la suite, sépare l'oxygène liquide du gaz utilisé pour la pressurisation du réservoir en phase de fonctionnement du moteur, même lorsque ce gaz est de l'oxygène gazeux.

Optionnellement, on forme une couche d'azote monophasique gazeux à la surface de l'oxygène liquide.

On forme une couche d'azote liquide à la surface de l'oxygène liquide en faisant régner dans le ciel gazeux une pression partielle d'azote supérieure à la pression de vapeur saturante de l'azote.

Dans ce cas, le tampon d'azote formé à la surface de l'oxygène liquide est diphasique, puisqu'il comprend une couche d'azote liquide au contact de l'oxygène liquide et, au-dessus de cette couche, une couche d'azote gazeux qui sera elle-même au contact du gaz utilisé pour la pressurisation en phase de fonctionnement du moteur.

En particulier, on fait régner une pression partielle d'azote supérieure à la pression de vapeur saturante de l'azote en agissant sur la pression totale de pré-pressurisation du réservoir.

On peut ainsi provoquer la création d'une couche d'azote liquide à la surface de l'oxygène liquide présent dans le réservoir et gérer l'épaisseur de cette couche.

Par exemple, on injecte l'azote gazeux de pré-pressurisation à une température comprise entre 150K et 350K.

Selon un mode de réalisation, lors du fonctionnement du moteur, on prélève de l'oxygène liquide, on réchauffe l'oxygène prélevé de manière à obtenir de l'oxygène gazeux, et on injecte l'oxygène gazeux dans le ciel gazeux, l'azote de pré-pressurisation formant un tampon d'azote entre l'oxygène liquide présent dans le réservoir et l'oxygène gazeux injecté dans le ciel gazeux.

Ainsi, pour la pressurisation du réservoir en phase de fonctionnement du moteur, on utilise l'oxygène présent dans le réservoir, en le prélevant sous forme liquide, puis en le gazéifiant avant de l'injecter. Ceci permet d'éviter d'avoir à utiliser un réservoir annexe contenant un gaz de pressurisation. Dans ce procédé, comme on l'a indiqué, la densité de l'azote gazeux reste supérieure à celle de l'oxygène gazeux, de sorte que le tampon d'azote reste efficace et évite le contact entre l'oxygène gazeux présent dans le ciel du réservoir et l'oxygène liquide présent en partie inférieure du réservoir. Ceci permet d'éviter les échanges thermiques importants entre l'oxygène gazeux présent dans le ciel du réservoir et l'oxygène liquide présent en partie inférieure du réservoir. D'une part, ceci permet d'éviter une augmentation de la densité et donc de la masse d'oxygène gazeux dans le ciel du réservoir et, d'autre part, d'éviter un échauffement de l'oxygène liquide au-delà des limites acceptables pour le moteur, en particulier pour sa pompe d'alimentation.

Optionnellement, le tampon d'azote comprend une couche d'azote liquide au contact de l'oxygène liquide, et de l'azote gazeux au-dessus de la couche d'azote liquide.

Optionnellement, en injectant l'oxygène gazeux dans le ciel du réservoir, on réduit la pression partielle d'azote dans le tampon d'azote de manière à vaporiser de l'azote de la couche d'azote liquide. Ce faisant, il est préférable de s'assurer que la densité de la vapeur saturante de l'azote soit supérieure à celle de l'oxygène gazeux pour que l'azote continue à jouer son rôle de tampon.

Ainsi, en phase de fonctionnement du moteur, le ciel gazeux est alimenté, d'une part, par l'oxygène gazeux injecté et, d'autre part, par la vaporisation de l'azote provenant de la couche d'azote liquide. Cette vaporisation de l'azote liquide contribue à maintenir une température basse à l'interface entre l'oxygène liquide et l'azote, par exemple une température de l'ordre de 90,5K, évitant ainsi un échauffement de l'oxygène liquide pouvant être préjudiciable au bon fonctionnement du moteur et/ou de sa pompe d'alimentation.

L'invention sera bien comprise et ses avantages apparaîtront mieux à la lecture de la description détaillée qui suit, d'un mode de réalisation représenté à titre d'exemple non limitatif.

La description se réfère aux dessins annexés, sur lesquels :
- la figure 1 montre schématiquement une partie d'un ensemble propulsif comprenant un réservoir d'oxygène liquide, pendant la pré-pressurisation de ce réservoir ;
- la figure 2 montre la même partie d'un ensemble propulsif que la figure 1, pendant la pressurisation du réservoir lors de la phase de fonctionnement du moteur ; et
- la figure 3 est une vue agrandie et partielle montrant le contenu du réservoir d'oxygène pendant la pressurisation lors de la phase de fonctionnement du moteur, selon une variante.

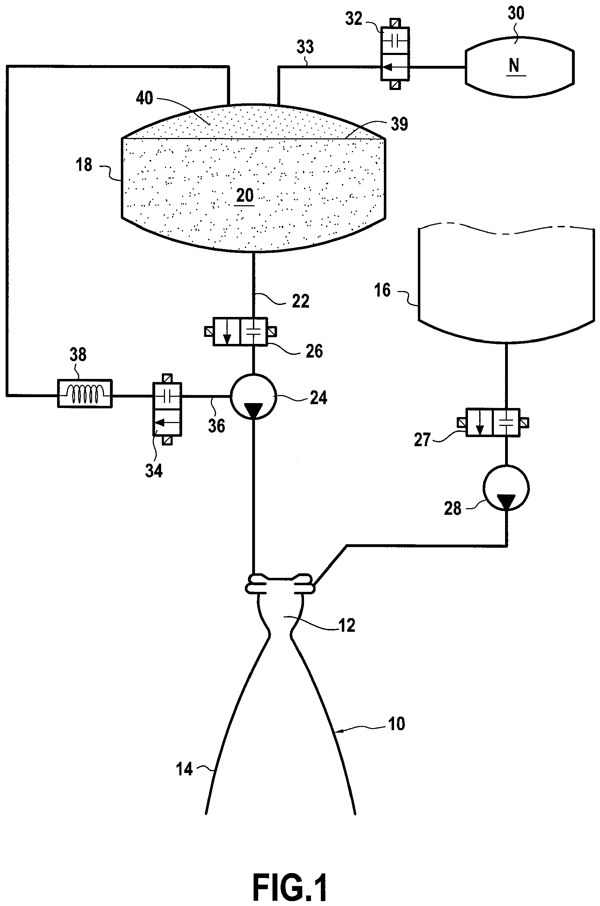

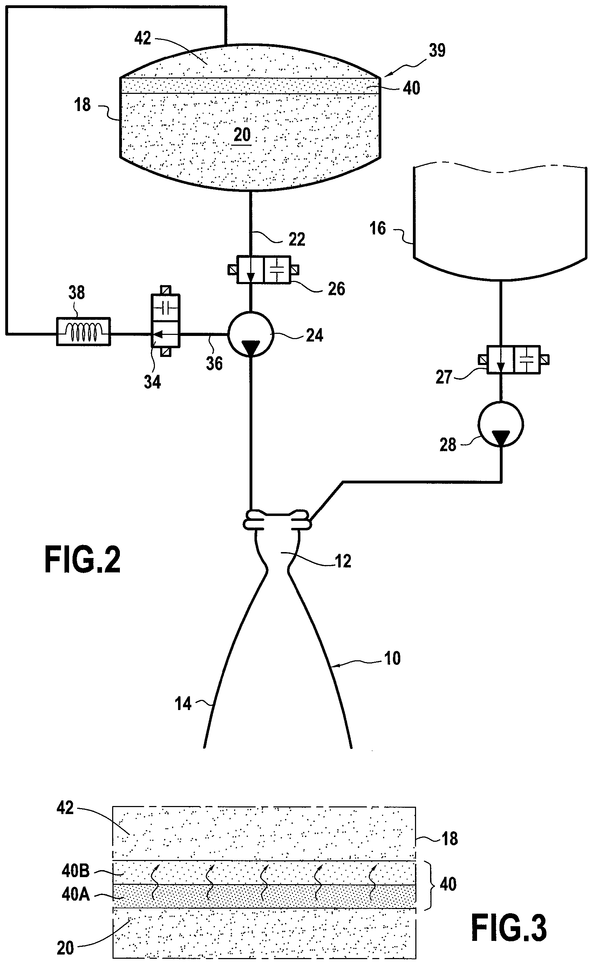

L'ensemble propulsif partiellement représenté sur les figures 1 et 2 comprend un moteur de fusée 10 ayant une chambre de combustion 12 et une tuyère 14 présentant un divergent. La chambre de combustion est alimentée en ergols à partir d'un premier réservoir 16, partiellement représenté, contenant un premier ergol qui sert de carburant, en particulier un ergol réducteur tel que de l'hydrogène ou du méthane, et est également alimentée en oxygène à partir du deuxième réservoir 18, l'oxygène formant un deuxième ergol qui sert de comburant pour la combustion.

On s'intéresse en particulier au deuxième réservoir 18 qui contient de l'oxygène liquide 20 situé en partie inférieure. Le bas du réservoir est relié, par une conduite d'alimentation 22, à une pompe 24, en particulier une turbopompe, qui sert à l'alimentation du moteur 10. Une vanne d'autorisation 26 est disposée entre le réservoir 18 et la pompe 24. Le dispositif représenté sur la figure 1 comprend également, pour l'alimentation du moteur 10 en premier ergol à partir du réservoir 16, une pompe 28 et une vanne d'autorisation 27, associées aux autres composants nécessaires (non représentés).

Le dispositif représenté sur la figure 1 comprend également un réservoir annexe 30 qui, en principe, n'est pas embarqué sur la fusée. C'est la raison pour laquelle ce réservoir est représenté seulement sur la figure 1, qui montre la situation en phase de pré-pressurisation du réservoir 1, avant le décollage de la fusée, alors qu'il n'est pas représenté sur la figure 2, qui montre la situation en phase de pressurisation, pendant le vol. Ce réservoir 30 est relié à la partie supérieure du réservoir 18 par une conduite d'alimentation 33, via une vanne d'autorisation 32. Ce réservoir 30 contient de l'azote.

Le dispositif représenté sur les figures 1 et 2 comprend en outre des moyens pour prélever de l'oxygène liquide à partir du réservoir, pour réchauffer cet oxygène de manière à le porter à l'état gazeux, et pour l'injecter en partie supérieure du réservoir 18, dans son ciel gazeux. En l'espèce, ces moyens comprennent une vanne de prélèvement 34 disposée sur une conduite de prélèvement 36 branchée en dérivation sur la pompe 24, et un réchauffeur 38 disposé sur la conduite 36, laquelle est reliée à la partie supérieure du réservoir 18. Le réchauffeur 38 peut être de tout type convenable, et peut par exemple comprendre une résistance ou tout type d'échangeur thermique, par exemple un réchauffeur placé dans la tuyauterie de gaz chaude, sur un générateur de gaz, du type décrit dans la demande de brevet français n° 3009 587. Le prélèvement d'oxygène liquide n'est pas nécessairement réalisé au niveau de la pompe. Il pourrait l'être dans une autre région de la conduite d'alimentation 22. Il pourrait également être prélevé par une autre conduite raccordée au réservoir à l'aide de tout moyen approprié tel qu'une motopompe ou équivalent.

Sur la figure 1, la vanne d'autorisation 32 est à l'état ouvert, de sorte que le haut du réservoir est alimenté en azote gazeux provenant du réservoir 30. En revanche, les vannes de prélèvement 26, 27 et 34 sont à l'état fermé, de sorte que les ergols provenant des réservoirs 16 et 18 n'alimentent pas le moteur, lequel n'est pas en fonctionnement, et que l'oxygène n'est pas prélevé en sortie du réservoir 18 pour alimenter le ciel gazeux. Cette situation est celle qui se produit juste avant le décollage et la mise en route du moteur. Le plein du réservoir 18 en oxygène liquide 20 a été fait, et ce réservoir est mis sous pression par création d'un ciel gazeux d'azote 40 au-dessus de l'oxygène liquide 20. Le réservoir 18 est ainsi pressurisé à quelques bars, par exemple de 2 à 6 bars selon l'architecture du dispositif.

La figure 2 montre les mêmes éléments que la figure 1, à l'exception de la conduite d'alimentation en azote 33, de la vanne de prélèvement 32 et du réservoir 30, ces éléments n'étant pas nécessairement embarqués. La figure 2 montre en effet la situation en phase de fonctionnement du moteur 10. Sur cette figure, on voit que la chambre de combustion 12 du moteur 10 est alimentée en ergols à partir des réservoirs 16 et 18, les vannes de prélèvement 27 et 26 étant ouvertes. De même, la vanne de prélèvement 34 est ouverte, de sorte que de l'oxygène liquide est prélevé en sortie du réservoir 18, réchauffé dans le réchauffeur 38, et injecté dans le ciel gazeux du réservoir 18. On voit ainsi que le réservoir 18 comprend, de bas en haut, de l'oxygène liquide 20, une couche d'azote 40 provenant de la pré-pressurisation, et un ciel d'oxygène gazeux 42.

La couche d'azote 40 forme un tampon entre l'oxygène liquide 20 et l'oxygène gazeux 42. Dans ce tampon, l'azote peut être uniquement présent à l'état gazeux, auquel cas le tampon est un tampon monophasique gazeux. Cependant, comme on l'a indiqué sur la figure 3, la couche d'azote 40 peut comprendre une couche inférieure 40A d'azote liquide, au contact de l'oxygène liquide 20, et une couche supérieure 40B d'azote gazeux au contact de l'oxygène gazeux 42.

On revient à la figure 1, qui montre que, quelques instants avant le décollage, la pré-pressurisation du réservoir d'oxygène liquide 18 est effectuée avec de l'azote gazeux. Dans cette situation, des échanges thermiques ont lieu dans le réservoir 18, l'azote gazeux injecté pouvant être plus chaud que l'oxygène liquide 20. Par exemple, l'azote gazeux est injecté à une température de l'ordre de 300K, tandis que l'oxygène liquide est à une température de l'ordre de 90,5K. Ainsi, au contact de l'oxygène liquide, l'azote de pré-pressurisation se refroidit mais le contact entre l'azote et le dôme du réservoir, c'est-à-dire la partie supérieure des parois du réservoir réchauffe légèrement ce dôme. La température de l'azote gazeux 40 peut ainsi se stabiliser, par exemple à 130K. Du fait de la chaleur apportée par l'azote gazeux, une petite partie de l'oxygène liquide peut se gazéifier à l'interface oxygène/azote, de sorte que cette interface 39 peut comprendre un mélange d'azote gazeux et d'oxygène gazeux, tandis que la partie supérieure du réservoir contient de l'azote gazeux 40. Dans la mesure où, même refroidi à la température de l'ordre de 90,5K à l'interface 39, l'azote a une densité inférieure à celle de l'oxygène, que celui-ci soit liquide ou gazéifié, l'azote reste au-dessus de l'oxygène liquide, en ne se mélangeant que peu à la fraction d'oxygène gazéifié. Si la pression partielle d'azote dans le ciel gazeux reste inférieure à la pression de vapeur saturante de l'azote à la température considérée (qui est de 3,77 bar pour de l'azote à 90,5K), alors l'azote reste gazeux. Sa densité peut, à ces conditions de température et de pression (la pression étant par exemple de 2 à 6 bar), atteindre une valeur supérieure à 15 kg/m³.

Sur la figure 2, de l'oxygène gazeux est injecté dans le ciel gazeux du réservoir. Sous l'effet du réchauffeur 38, l'oxygène gazeux atteint par exemple une température de l'ordre de 300K et sa densité sera de l'ordre de 2,5 à 7,7 kg/m³, pour des pressions usuelles de pressurisation, de l'ordre de 2 à 6 bar. Ainsi, la densité de l'oxygène injecté dans le ciel gazeux est inférieure à celle de l'azote de la couche 40, de sorte que l'oxygène gazeux 42 reste au-dessus de cette couche 40, laquelle forme un tampon séparant l'oxygène liquide de l'oxygène gazeux.

Ainsi qu'on l'a vu, ce tampon peut être un tampon de gaz monophasique, en faisant abstraction de la légère vaporisation d'oxygène liquide qui se produit strictement à l'interface 39 de la couche d'azote 40 et l'oxygène liquide 20.

On a indiqué précédemment que la pression de pré-pressurisation du réservoir est par exemple de l'ordre de 2 à 6 bars. On peut choisir de légèrement augmenter la pression partielle d'azote pour qu'elle atteigne ou dépasse la pression de vapeur saturante de l'azote, de manière à ce qu'une fraction de l'azote se liquéfie. On peut également abaisser la température de l'azote injecté dans le réservoir, par exemple au voisinage de 200K voire 150K, pour augmenter son débit massique et favoriser sa liquéfaction. Cependant, la densité de l'oxygène liquide 20 est d'environ 1,5 fois supérieure à celle de l'azote liquide, de sorte que la couche d'azote liquide 40A représentée sur la figure 3 reste à la surface de l'oxygène liquide. Au-dessus de cette couche d'azote liquide, la température augmente progressivement vers le haut du réservoir du fait du réchauffement du dôme gazeux dû en particulier à l'injection de l'oxygène gazeux a une température supérieure, par exemple de l'ordre de 300K, de sorte qu'une couche d'azote gazeux 40B subsiste au-dessus de la couche d'azote liquide 40A. Ainsi, dans le cas de la figure 3, le tampon d'azote qui est formé entre l'oxygène liquide 20 et l'oxygène gazeux injecté par la conduite 36 est un tampon diphasique, comprenant une couche inférieure liquide 40A et une couche supérieure gazeuse 40B. L'épaisseur de la couche d'azote liquide 40A peut être réglée pendant la phase de pré-pressurisation. En effet, à partir du moment où la pression partielle d'azote atteint la pression de vapeur saturante on peut augmenter la durée ou le débit de pré-pressurisation, ce qui a pour effet d'augmenter la pression partielle d'azote, favorisant ainsi la liquéfaction de l'azote. La surface libre de l'azote liquide se comporte comme la paroi froide d'une cryopompe, qui favorise la liquéfaction de l'azote gazeux venant à son contact. Lorsque l'on considère qu'une couche d'azote liquide d'épaisseur suffisante a été obtenue, il suffit de faire cesser la pré-pressurisation. Par ailleurs, en abaissant la température de l'azote injecté pendant la phase de pré-pressurisation, par exemple à 200K, voire 150K, on peut augmenter la quantité d'azote liquéfié, sans pour autant augmenter la durée de la phase de pré-pressurisation.

En phase de fonctionnement du moteur, la pressurisation du réservoir 18 est assurée par l'injection d'oxygène gazeux, ainsi qu'il a été ainsi indiqué. Dans la gamme de température et de pression classiquement mise en oeuvre, l'oxygène gazeux a une densité qui est inférieure à celle de l'azote, qu'il s'agisse de l'azote liquide ou de l'azote gazeux des couches 40A ou 40B. Ainsi, l'oxygène gazeux reste au-dessus du tampon d'azote qui a été créé. Il en résulte que l'oxygène gazeux du ciel gazeux reste bien séparé de l'oxygène liquide 20. A mesure que l'oxygène liquide 20 est consommé du fait du fonctionnement du moteur, le volume gazeux du ciel gazeux tend à augmenter et, dans la mesure où la quantité d'azote présente reste constante, la pression partielle d'azote diminue. Ainsi, l'azote liquide de la couche 40A a tendance à se vaporiser, ce qui alimente le tampon gazeux de la couche 40B. Cette vaporisation permet d'éviter de réchauffer l'oxygène liquide 20 présent sous la couche 40A et permet ainsi de maintenir cet oxygène à une température optimale pour le fonctionnement du moteur.

## Revendications

1. Procédé de pressurisation d'un réservoir d'oxygène liquide (18) pour l'alimentation en comburant d'un moteur de fusée (10), selon lequel, après le remplissage du réservoir (18) en oxygène liquide (20) mais avant de faire fonctionner le moteur (10), on injecte de l'azote gazeux de pré-pressurisation pour former un ciel gazeux (40) dans le réservoir, **caractérisé en ce qu'**on forme une couche d'azote liquide (40A) à la surface de l'oxygène liquide (20) en faisant régner dans le ciel gazeux une pression partielle d'azote supérieure à la pression de vapeur saturante de l'azote.

2. Procédé selon la revendication 1, **caractérisé en ce qu'**on fait régner une pression partielle d'azote supérieure à la pression de vapeur saturante de l'azote en agissant sur la pression totale de pré-pressurisation du réservoir (18).

3. Procédé selon l'une quelconque des revendications 1 à 2, **caractérisé en ce que** l'on injecte de l'azote gazeux de pré-pressurisation à une température comprise entre 150K et 350K.

4. Procédé selon l'une quelconque des revendications 1 à 3, **caractérisé en ce que**, lors du fonctionnement du moteur (10), on prélève de l'oxygène liquide (20), on réchauffe (38) l'oxygène prélevé de manière à obtenir de l'oxygène gazeux, et on injecte l'oxygène gazeux dans le ciel gazeux (42), l'azote de pré-pressurisation formant un tampon d'azote (40, 40A, 40B) entre l'oxygène liquide (20) présent dans le réservoir et l'oxygène gazeux (42) injecté dans le ciel gazeux.

5. Procédé selon la revendication 4, **caractérisé en ce que** le tampon d'azote (40) comprend une couche d'azote liquide (40A) au contact de l'oxygène liquide (20), et de l'azote gazeux (40B) au-dessus de la couche d'azote liquide.

6. Procédé selon la revendication 5, **caractérisé en ce que**, en injectant l'oxygène gazeux (42) dans le ciel du réservoir, on réduit la pression partielle d'azote dans le tampon d'azote (40) de manière à vaporiser de l'azote de la couche d'azote liquide (40A).

## Patentansprüche

1. Druckbeaufschlagungsverfahren eines Flüssigsauerstoffbehälters (18) für die Versorgung eines Raketentriebwerks (10) mit einem Sauerstoffträger, gemäß welchem nach dem Befüllen des Behälters (18) mit Flüssigsauerstoff (20), jedoch vor der Inbetriebnahme des Triebwerks (10), gasförmiger Stickstoff zur Vordruckbeaufschlagung eingespritzt wird, um oben in dem Behälter einen gasförmigen Nebel (40) zu bilden, **dadurch gekennzeichnet, dass** eine Schicht aus flüssigem Stickstoff (40A) an der Oberfläche des Flüssigsauerstoffs (20) gebildet wird, indem in dem gasförmigen Nebel ein Stickstoffpartialdruck herrscht, der größer als der Sättigungsdampfdruck des Stickstoffs ist.

2. Verfahren nach Anspruch 1, **dadurch gekennzeichnet, dass** ein Stickstoffpartialdruck herrscht, der größer als der Sättigungsdampfdruck des Stickstoffs ist, indem auf den Gesamtdruck der Vordruckbeaufschlagung des Behälters (18) eingewirkt wird.

3. Verfahren nach einem der Ansprüche 1 bis 2, **dadurch gekennzeichnet, dass** gasförmiger Stickstoff zur Vordruckbeaufschlagung bei einer Temperatur zwischen 150 K und 350 K eingespritzt wird.

4. Verfahren nach einem der Ansprüche 1 bis 3, **dadurch gekennzeichnet, dass** während des Betriebs des Triebwerks (10) Flüssigsauerstoff (20) entnommen wird, der entnommene Sauerstoff erwärmt (38) wird, um gasförmigen Sauerstoff zu erhalten, und der gasförmige Sauerstoff in den gasförmigen Nebel (42) eingespritzt wird, wobei der Stickstoff zur Vordruckbeaufschlagung zwischen dem Flüssigsauerstoff (20), der in dem Behälter vorliegt, und dem gasförmigen Sauerstoff (42), der in den gasförmigen Nebel eingespritzt wird, einen Stickstoffpuffer (40, 40A, 40B) bildet.

5. Verfahren nach Anspruch 4, **dadurch gekennzeichnet, dass** der Stickstoffpuffer (40) eine Schicht aus flüssigem Stickstoff (40A), die mit dem Flüssigsauerstoff (20) in Kontakt steht, und aus gasförmigem Stickstoff (40B) über der Schicht aus flüssigem Stickstoff umfasst.

6. Verfahren nach Anspruch 5, **dadurch gekennzeichnet, dass**, indem der gasförmige Sauerstoff (42) in den Nebel des Behälters eingespritzt wird, der Stickstoffpartialdruck in dem Stickstoffpuffer (40) verringert wird, um Stickstoff der Schicht aus flüssigem Stickstoff (40A) zu verdampfen.

## Claims

1. A method of pressurizing a liquid oxygen tank (18) for feeding a rocket engine (10) with oxidizer, in which method, after filling the tank (18) with liquid oxygen (20) but before causing the engine (10) to operate, pre-pressurization gaseous nitrogen is injected into the tank in order to form a gas blanket (40), the method being **characterized in that** a liquid nitrogen layer (40A) is formed at the surface of the liquid oxygen (20) by causing the partial pressure of the nitrogen in the gas blanket to be greater than its saturated vapor pressure.

2. A method according to claim 1, **characterized in that** the partial pressure of the nitrogen is caused to be greater than its saturated vapor pressure by acting on the total pre-pressurization pressure of the tank (18).

3. A method according to claim 1 or claim 2, **characterized in that** the pre-pressurization gaseous nitrogen is injected at a temperature lying in the range 150 K to 350 K.

4. A method according to any one of claims 1 to 3, **characterized in that** while the engine (10) is in operation, liquid oxygen (20) is taken off, the taken-off oxygen is heated (38) so as to obtain gaseous oxygen, and the gaseous oxygen is injected into the gas blanket (42), the pre-pressurization nitrogen forming a nitrogen buffer (40, 40A, 40B) between the liquid oxygen (20) present in the tank and the gaseous oxygen (42) injected into the gas blanket.

5. A method according to claim 4, **characterized in that** the nitrogen buffer (40) comprises a layer of liquid nitrogen (40A) in contact with the liquid oxygen (20), and gaseous nitrogen (40B) above the layer of liquid nitrogen.

6. A method according to claim 5, **characterized in that** by injecting gaseous oxygen (42) into the blanket of the tank, the partial pressure of nitrogen in the nitrogen buffer (40) is reduced so as to vaporize the nitrogen of the liquid nitrogen layer (40A).
